# EUROPÄISCHE PATENTSCHRIFT

(11) **EP 0 741 859 B1**
(45) Veröffentlichungstag und Bekanntmachung des Hinweises auf die Patenterteilung: **18.02.2004**
(21) Anmeldenummer: 95935802.9
(22) Anmeldetag: 24.10.1995
(51) Int. Cl.: G01F 1/68

(54) **VORRICHTUNG ZUR MESSUNG DER MASSE EINES STRÖMENDEN MEDIUMS**
DEVICE FOR MEASURING THE MASS OF A FLOWING MEDIUM
DISPOSITIF PERMETTANT DE MESURER LA MASSE D'UN MILIEU EN ECOULEMENT

(30) Priorität: 24.11.1994 DE 4441874
(43) Veröffentlichungstag der Anmeldung: 13.11.1996
(73) Patentinhaber: ROBERT BOSCH GMBH, 70442 Stuttgart (DE)
(72) Erfinder: HECHT, Hans, D-70825 Korntal-Münchingen (DE); RILLING, Heinz, D-71735 Eberdingen (DE); LEHENBERGER, Stefan, D-71636 Ludwigsburg (DE); KONZELMANN, Uwe, D-71679 Asperg (DE)
(86) Internationale Anmeldenummer: PCT/DE1995/001477
(87) Internationale Veröffentlichungsnummer: WO 1996/016317

(56) Entgegenhaltungen:
- EP-A- 0 173 946
- EP-A- 0 313 089
- EP-A- 0 450 563
- EP-A- 0 588 626
- PATENT ABSTRACTS OF JAPAN vol. 17 no. 220 (P-1529) ,30.April 1993 & JP,A,04 355329 (HITACHI LTD) 9.Dezember 1992,

## Beschreibung

### Stand der Technik

Die Erfindung geht aus von einer Vorrichtung zur Messung der Masse eines strömenden Mediums nach der Gattung des Anspruchs 1. Es ist bereits in der DE-A-44 07 209 eine Vorrichtung vorgeschlagen worden, die einen sich quer zur Strömung des Mediums erstreckenden Trägerkörper hat, der steckbar in eine aus einer Begrenzungswandung der Strömung ausgenommene Öffnung eingeführt ist. Die Begrenzungswandung stellt beispielsweise eine Wandung eines Ansaugrohres dar, durch das hindurch eine Brennkraftmaschine Luft aus der Umgebung angesaugt. Der Trägerkörper hat eine längliche Form und besitzt an seinem in das strömende Medium ragenden, freien Endbereich einen Meßkanal, der vom Medium durchströmt wird. Im Meßkanal ist ein temperaturabhängiges Meßelement untergebracht, das in sogenannter mikromechanischer Bauweise ausgebildet ist. Derartige Meßelemente besitzen auf einem plattenförmigen Träger einen durch Ausätzen eines Siliziumwafers hergestellten Sensorbereich, der mit mehreren Widerstandsschichten wenigstens einen temperaturabhängigen Meßwiderstand bildet. Der Sensorbereich umfaßt nur einen kleinen Ausschnitt auf dem Träger und besitzt eine äußerst geringe Dicke, um mit schneller Reaktionszeit Änderungen der Strömungsgeschwindigkeit, beziehungsweise Änderungen der Masse des strömenden Mediums zu erfassen.

Beim Betrieb der Brennkraftmaschine herrscht durch das Öffnen und Schließen der Einlaßventile der Brennkraftmaschine eine stark pulsierende Strömung im Ansaugrohr vor, die wie bei fast allen technischen strömungen turbulenten Charakter hat. Der Einfluß der Pulsationen in der Strömung wird teils durch die Unterbringung des Meßelements im Meßkanal gedämpft, wobei durch die Turbulenz in der Strömung, insbesondere bei mikromechanischen Meßelementen, ein sogenanntes Grundrauschen des vom Meßelement abgegebenen Meßsignals entsteht. Das Grundrauschen des vom Meßelement abgegebenen elektrischen Meßsignals erschwert jedoch eine präzise Messung der Strömungsgeschwindigkeit.

Im erwähnten Stand der Technik sind die Begrenzungswände des Meßkanals stromaufwärts einer Einlaßöffnung des Meßkanals abgerundet ausgebildet, um eine möglichst ungestörte Einströmung ohne Strömungsablösungen in den Meßkanal und eine Parallelströmung im Meßkanal, insbesondere im Bereich des Meßelements, zu erzielen. Dies läßt sich jedoch mit den abgerundeten Begrenzungswänden nur eingeschränkt verwirklichen, da der Einlaßbereich des Meßkanals aufgrund der angestrebten kleinen Bauweise der Vorrichtung eine zu geringe Erstreckung in Strömungsrichtung aufweist, um insbesondere bei turbulenter Strömung eine optimale Einströmung ohne Strömungsablösungen zu erhalten. Bei bestimmten Strömungsverhältnissen können sich daher Strömungsablösungen insbesondere im Einlaßbereich des Meßkanals einstellen, die zeitlich instabiler Natur sind und welche die Strömung im Bereich des Meßelements derart beeinflussen, daß eine Verstärkung des Meßsignalrauschens und damit Verschlechterung des Meßergebnisses auftritt.

Durch die EP-A-0 588 626 ist bereits eine Vorrichtung zur Messung der Masse eines strömenden Mediums bekannt bei der in einem Trägerkörper ein Meßkanal mit einem Meßelement und stromaufwärts des Meßelementes am Trägerkörper ein Strömungshindernis vorgesehen ist, das eine im Meßkanal wirksame, definierte Strömungsablösung bewirkt.

### Vorteile der Erfindung

Die erfindungsgemäße Vorrichtung mit den Merkmalen des Anspruchs 1 hat den Vorteil, daß die Vorrichtung ein deutlich reduziertes Meßsignalrauschen aufweist, so daß ein gegenüber dem Stand der Technik verbessertes Meßergebnis erzielbar ist.

Durch die in den Unteransprüchen aufgeführten Maßnahmen sind vorteilhafte Weiterbildungen und Verbesserungen der im Anspruch 1 angegebenen Vorrichtung möglich.

### Zeichnung

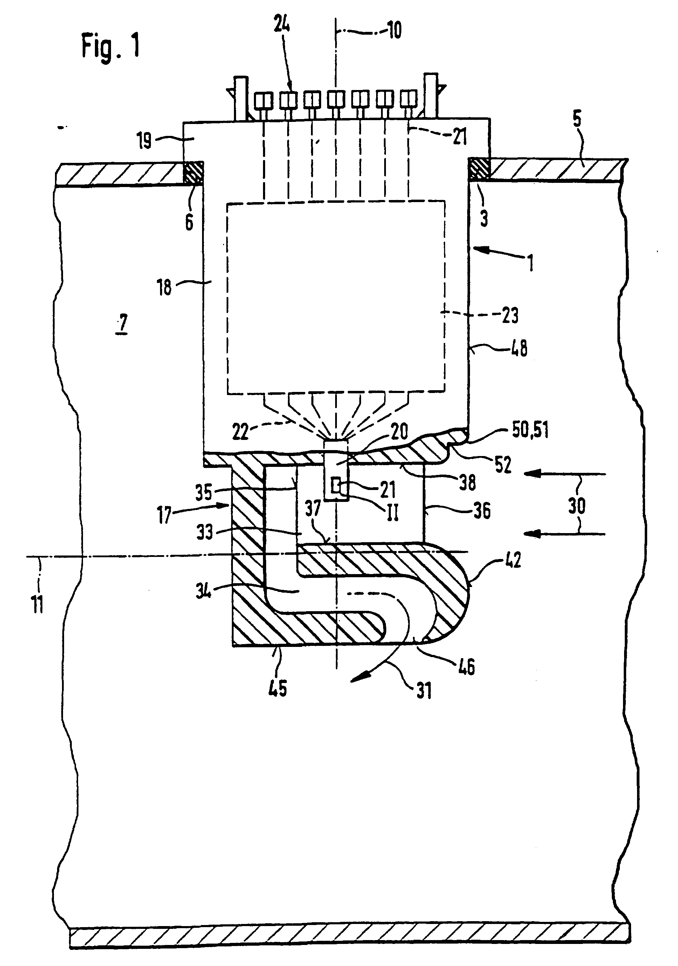

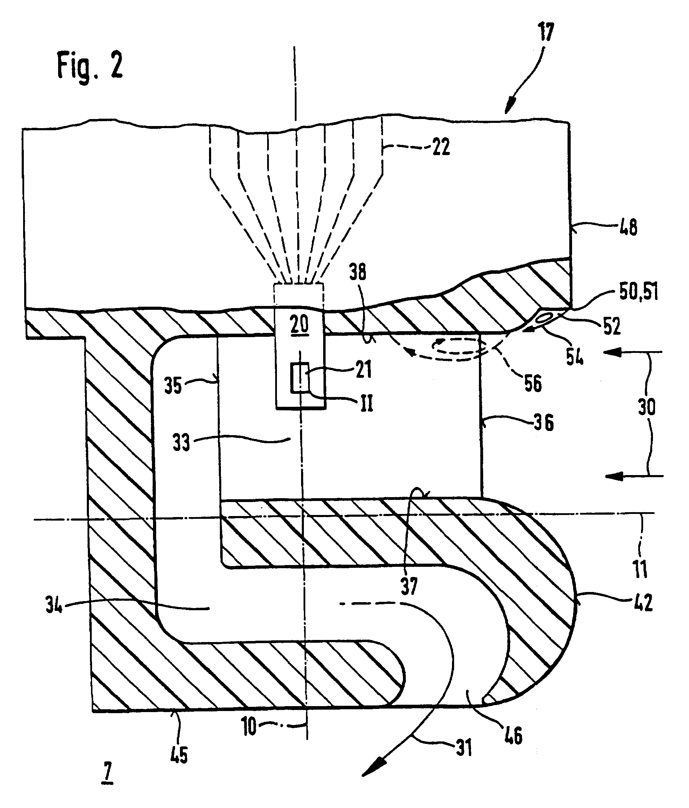

Ein Ausführungsbeispiel der Erfindung ist in der Zeichnung vereinfacht dargestellt und in der nachfolgenden Beschreibung näher erläutert. Es zeigen Figur 1 in teilweiser Schnittdarstellung eine Seitenansicht einer erfindungsgemäß ausgebildeten Vorrichtung, Figur 2 einen vergrößerten Ausschnitt aus Figur 1.

### Beschreibung des Ausführungsbeispiels

Die Figur 1 zeigt in teilweiser Schnittdarstellung eine Seitenansicht einer mit 1 gekennzeichneten Vorrichtung, die zur Messung der Masse eines strömenden Mediums, insbesondere der Ansaugluftmasse von Brennkraftmaschinen, dient. Die Vorrichtung 1 hat vorzugsweise eine schlanke, sich radial in Richtung einer Längsachse 10 länglich erstreckende, quaderförmige Gestalt und ist in eine aus einer Begrenzungswandung 5 ausgenommenen Öffnung 6 beispielsweise steckbar eingeführt. Die Begrenzungswandung 5 stellt beispielsweise eine Wandung eines Ansaugrohres dar, durch das hindurch die Brennkraftmaschine Luft aus der Umgebung ansaugt. Die Begrenzungswandung 5 begrenzt einen Strömungsquerschnitt 7, der zum Beispiel im Fall eines zylindrischen Ansaugrohres etwa einen kreisrunden Querschnitt aufweist, in dessen Mitte sich in axialer Richtung, parallel zur Begrenzungswandung 5 eine Mittelachse 11 erstreckt, die senkrecht zur Längsachse 10 der Vorrichtung 1 orientiert ist. Die Vorrichtung 1 ist mittels eines Dichtungsringes 3 in der Begrenzungswandung 5 abgedichtet und beispielsweise mittels einer nicht näher dargestellten Schraubverbindung mit dieser fest verbunden. Die Vorrichtung 1 ragt mit einem im folgenden als Meßteil 17 bezeichneten Teil in das strömende Medium, wobei der Meßteil 17 beispielsweise etwa in der Mitte des Strömungsquerschnitts 7 von der Mittelachse 11 symmetrisch aufgeteilt wird, damit das strömende Medium ein im Meßteil 17 untergebrachtes temperaturabhängiges Meßelement 20 möglichst ohne störende Randeinflüsse der Begrenzungswandung 5 anströmt. Im Ausführungsbeispiel in den Figuren 1 und 2 strömt das Medium von rechts nach links, wobei die Strömungsrichtung durch entsprechende Pfeile 30 gekennzeichnet ist.

Die Vorrichtung 1 setzt sich einstückig aus dem Meßteil 17, einem Trägerteil 18 und einem Halteteil 19 zusammen und ist zum Beispiel aus Kunststoff in Kunststoffspritzgußtechnik hergestellt. Das Meßelement 20 kann durch Ausätzen eines Halbleiterkörpers, beispielsweise eines Siliziumwafers, in sogenannter mikromechanischer Bauweise hergestellt werden und besitzt einen Aufbau, der zum Beispiel der DE-OS 42 19 454 entnehmbar ist. Das Meßelement 20 hat einen durch Ausätzen entstandenen membranförmigen Sensorbereich 21, der in den Figuren 1 und 2 von einer eingezeichneten Linie II begrenzt wird. Der Sensorbereich 21 hat eine äußerst geringe Dicke und besitzt mehrere, ebenfalls durch Ausätzen entstandene Widerstandsschichten, die wenigstens einen temperaturabhängigen Meßwiderstand und beispielsweise einen Heizwiderstand bilden. Es ist auch möglich, das Meßelement 20 als sogenanntes Heißfilmsensorelement vorzusehen, dessen Aufbau beispielsweise der DE-OS 36 38 138 entnehmbar ist. Derartige Heißfilm-Sensorelemente besitzen ebenfalls auf einem plattenförmigen Substrat aufgebrachte einzelne Widerstandsschichten, die wenigstens einen temperaturabhängigen Meßwiderstand und beispielsweise wenigstens einen Heizwiderstand umfassen. Die einzelnen Widerstandsschichten des Meßelements 20, beziehungsweise des Sensorbereichs 21 sind mittels im Innern der Vorrichtung 1 verlaufenden Anschlußleitungen 22 mit einer in der Figur 1 gestrichelt dargestellten elektronischen Auswerteschaltung 23 elektrisch verbunden. Die elektronische Auswerteschaltung 23 enthält beispielsweise eine brückenähnliche Widerstandsmeßschaltung. Die Auswerteschaltung 23 ist zum Beispiel im Trägerteil 18 oder im Halteteil 19 der Vorrichtung 1 untergebracht. Mit einer am Halteteil 19 vorgesehenen Steckverbindung 24 können die von der Auswerteschaltung 23 bereitgestellten elektrischen Signale beispielsweise einem weiteren elektronischen Steuergerät zur Auswertung zugeführt werden, welches unter anderem. Funktionen der elektronischen Leerlaufsteuerung oder der Motorleistungssteuerung der Brennkraftmaschine steuert. Auf eine ausführliche Beschreibung der Funktion und des Aufbaus temperaturabhängiger Meßelemente wird verzichtet, da dies der Fachmann dem Stand der Technik entnehmen kann.

Der Meßteil 17 der Vorrichtung 1 besitzt beispielsweise eine quaderförmige Gestalt und einen sich in axialer Richtung im Meßteil 17 erstreckenden Meßkanal 33 und zum Beispiel einen eine S-Form aufweisenden Umlenkkanal 34. Der Meßkanal 33 erstreckt sich in Richtung der Mittelachse 11 axial im Meßteil 17 von einer, zum Beispiel einen rechteckförmigen Querschnitt aufweisenden Einlaßöffnung 36 bis zu einer Mündung 35. Der Meßkanal 33 ist von einer der Mittelachse 11 entfernteren Oberfläche 38 und einer der Mittelachse 11 näheren Unterfläche 37 sowie zwei Seitenflächen begrenzt. Anstelle den Meßkanal 33 exzentrisch zur Mittelachse 11 anzuordnen, ist es auch möglich, diesen zentrisch oder im Bereich der Mittelachse 11 der Begrenzungswandung 5 anzuordnen. Das plattenförmige Meßelement 20 ist im Meßkanal 33 mit seiner größten Erstreckung radial in Richtung der Längsachse 10 orientiert und wird symmetrisch von dieser aufgeteilt. Das Meßelement 20 ist mit einem seiner schmalen Enden einseitig im Trägerteil 18 an der Oberfläche 38 gehalten, so daß dieses mit seinen beiden Seitenflächen in etwa parallel zur Mittelachse 11 vom Medium umströmt wird. Das Medium strömt von der Einlaßöffnung 36 des Meßkanals 33 zum Meßelement 20 und von diesem in den Umlenkkanal 34, um den Umlenkkanal 34 in radialer Richtung in Richtung eines in den Figuren 1 und 2 eingezeichneten Pfeils 31 aus einer Auslaßöffnung 46 zu verlassen. Das aus der Auslaßöffnung 46 herausströmende Medium vermischt sich anschließend wieder mit dem um die Vorrichtung 1 herumströmenden Medium. Die Auslaßöffnung 46 besitzt wie der Umlenkkanal 34 beispielsweise einen rechteckförmigen Querschnitt und ist an einer parallel zur Mittelachse 11 orientierten, unteren Außenfläche 45 des Meßteils 17 vorgesehen. Rechts von der rechteckförmigen Auslaßöffnung 46 schließt sich quer zur unteren Außenfläche 45 eine der Strömung 30 entgegenstehende Berandungsfläche 42 des Meßteils 17 an, die stromaufwärts der Einlaßöffnung 36 in abgerundeter Form von der unteren Außenfläche 45 zur Unterfläche 37 des Meßkanals 33 bis an die Einlaßöffnung 36 führt.

Erfindungsgemäß ist stromaufwärts des Meßelements 20 im Bereich der Einlaßöffnung 36 des Meßkanals 33 ein Strömungshindernis 50 vorgesehen, das im Ausführungsbeispiel in Form einer Stolperkante 51 ausgebildet ist. Die Stolperkante 51, die eine scharfkantige Umlenkung der Strömung bewirkt, ist an der Oberfläche 38 an einem zu der Strömung 30 hin offenen Ende des Meßkanals 33 vorgesehen. Das Ende des Meßkanals 33 wird von einer Stirnfläche 48 des Halteteils 18 der Vorrichtung 1 und der Berandungsfläche 42 begrenzt. Die beispielsweise rechteckförmige Stirnfläche 48 steht der Strömung 30 entgegen und erstreckt sich parallel zur Längsachse 10 vom Meßteil 17 zur Begrenzungswandung 5.

Stromabwärts der in der Nähe der Stirnfläche 48 vorgesehenen Stolperkante 51 ist eine rinnenförmige Vertiefung 52 aus der Oberfläche 38 des Meßkanals 33 ausgenommen, die sich quer zur Längsachse 10 und quer zur Mittelachse 11 erstreckt. Die rirmenförmige Vertiefung 52 ragt also senkrecht zur Zeichenebene in die Zeichenebene der Figuren 1 und 2 hinein und hat dabei eine Erstreckung, die etwa der Breite des Öffnungsquerschnitts der Einlaßöffnung 36 des Meßkanals 33 entspricht.

Wie in der Figur 2, einer vergrößerten Darstellung des Meßteils 17, dargestellt ist, bewirkt die Stolperkante 51 ein in Figur 2 eingezeichnetes Ablösegebiet 54, das im wesentlichen den Bereich der Vertiefung 52 einnimmt. Das Ablösegebiet 54 der Strömung ist zeitlich und räumlich relativ stabil und tritt stets an gleicher Stelle auf, mit dem Effekt, das die bei bisherigen Vorrichtungen zeitlich instabilen und an verschiedenen Stellen auftauchenden Ablösegebiete 56 verhindert oder zumindest stark abgeschwächt werden. Von derartigen, in der Figur 2 gestrichelt eingezeichneten, sporadisch auftretenden Ablösegebieten 56 gehen Störungen in die Strömung über, die zu einer Erhöhung des sogenannten Grundrauschens des vom Meßelement 20 abgegebenen elektrischen Meßsignals führen. Mittels der Stolperkante 51, beziehungsweise des stabilen Ablösegebiets 54 werden solche Störungen vermieden, so daß das Grundrauschen verringert wird. Es ist auch möglich, anstelle der Stolperkante 51 andersartig gestaltete Strömungshindernisse auszubilden, beispielsweise in Form eines in der Strömungslehre bekannten, sogenannten Stolperdrahtes. In die Strömung hineinragende Stolperdrähte werden wie Stolperkanten an bestimmter Stelle an einem Körper angebracht, um durch eine punktuelle Erhöhung des Strömungswiderstandes am Körper, stromabwärts der Stolperkante beziehungsweise des Stolperdrahtes, ein definiertes Ablösegebiet in der Strömung herbeizuführen.

Hierzu hat das Strömungshindernis eine Abmessung, welche der Grenzschichtdicke an der Stelle des vorgesehenen Strömungshindernisses in etwa entspricht, wodurch sich stromabwärts des Strömungshindernisses ein besonders hoher Druckgradient zur Wandung hin ergibt, so daß sich stromabwärts des Strömungshindernisses ein zeitlich und räumlich stabiles Ablösegebiet einstellt.

## Patentansprüche

1. Vorrichtung zur Messung der Masse eines strömenden Mediums, insbesondere der Ansaugluftmasse von Brennkraftmaschinen, mit einem sich quer zur Strömung (30) des Mediums erstreckenden Trägerkörper, der aus einer die Strömung begrenzenden Wandung (5) in die Strömung (30) hineinragt, wobei ein im Trägerkörper vorgesehener Meßkanal (33) mit einer Einlaßöffnung (36) vom strömenden Medium durchströmt wird, in welchern ein temperaturabhängiges Meßelement (20) untergebracht ist, und wobei im Bereich der Einlaßöffnung (36) an einer Oberfläche (38) an einem zu der Strömung (30) hin offenen Ende des Meßkanals (33) stromaufwärts des Meßelements (20) am Trägerkörper ein Strömungshindernis (50) vorgesehen ist, das eine im Meßkanal (33) wirksame, definierte Strömungsablösung (54) bewirkt.

2. Vorrichtung nach Anspruch 1, **dadurch gekennzeichnet, daß** das Strömungshindernis (50) in Form einer Stolperkante (51) ausgebildet ist.

3. Vorrichtung nach Anspruch 2, **dadurch gekennzeichnet, daß** stromabwärts der Stolperkante (51) aus einer den Meßkanal (33) begrenzenden Wandung (38) eine Vertiefung (52) ausgenommen ist.

4. Vorrichtung nach Anspruch 1, **dadurch gekennzeichnet, daß** das Strömungshindernis (50) in Form eines Stolperdrahtes ausgebildet ist.

## Claims

1. Device for measuring the mass of a flowing medium, in particular the intake air mass of internal combustion engines, having a carrier body which extends transversely with respect to the flow (30) of the medium and which projects from a wall (5), which limits the flow, into the flow (30), the flowing medium flowing through a measuring duct (33), which is provided in the carrier body, has an inlet opening (36) and in which a temperature-dependent measuring element (20) is accommodated, and a flow obstacle (50), which brings about a defined separation (54) of the flow effective in the measuring duct (33), being provided upstream of the measuring element (20) on the supporting body in the region of the inlet opening (36) on a surface (38) at an end of the measuring duct (33) which is open to the flow (30).

2. Device according to Claim 1, **characterized in that** the flow obstacle (50) is embodied in the form of a trip edge (51).

3. Device according to Claim 2, **characterized in that** a depression (52) is made in a wall (38) which bounds the measuring duct (33), downstream of the trip edge (51).

4. Device according to Claim 1, **characterized in that** the flow obstacle (50) is embodied in the form of a trip wire.

## Revendications

1. Dispositif pour mesurer la masse d'un milieu en écoulement notamment de la masse d'air aspiré par des moteurs à combustion interne comprenant un support s'étendant transversalement à l'écoulement (30) du milieu, ce support pénétrant dans l'écoulement (30) avec une paroi (5) délimitant l'écoulement,
un canal de mesure (33) avec un orifice d'entrée (36) étant prévu dans le support pour être traversé par le milieu en écoulement, un élément de mesure (20) dépendant de la température étant placé dans ce canal, et au niveau de l'orifice d'entrée (36) sur une surface supérieure (38) à une extrémité du canal de mesure (33) ouvert vers l'écoulement (30), en aval de l'élément de mesure (20) sur le corps de support il est prévu un obstacle d'écoulement (50) qui produit un décrochement d'écoulement (54) défini, agissant dans le canal de mesure (33).

2. Dispositif pour mesurer la masse d'un milieu qui coule selon la revendication 1,
**caractérisé en ce que**
l'obstacle d'écoulement (50) est réalisé sous la forme d'une arête de butée (51).

3. Dispositif pour mesurer la masse d'un milieu qui coule selon la revendication 2,
**caractérisé en ce qu'**
une cavité (52) est prévue dans la paroi (38) délimitant le canal de mesure (33) en aval de l'arête de butée (51).

4. Dispositif pour mesurer la masse d'un milieu qui coule selon la revendication 1,
**caractérisé en ce que**
l'obstacle d'écoulement (51) est réalisé sous la forme d'un fil de butée.
